# EUROPÄISCHE PATENTSCHRIFT

(11) **EP 2 803 154 B1**
(45) Veröffentlichungstag und Bekanntmachung des Hinweises auf die Patenterteilung: **12.08.2020**
(21) Anmeldenummer: 13724148.5
(22) Anmeldetag: 09.04.2013
(51) Int. Cl.: H04J 3/06, H04L 12/26, G01S 19/21

(54) **VERFAHREN UND MASTERCLOCK ZUR ERSTELLUNG VON FAIL-SILENT SYNCHRONISATIONSNACHRICHTEN**
METHOD AND MASTERCLOCK FOR PROVIDING FAIL-SILENT SYNCHRONISATION MESSAGES
PROCÉDÉ ET HORLOGE MAÎTRE AFIN DE METTRE A DISPOSITION DE MESSAGES DE SYNCHRONISATION

(30) Priorität: 11.04.2012 AT 4322012
(43) Veröffentlichungstag der Anmeldung: 19.11.2014
(73) Patentinhaber: TTTech Computertechnik AG, 1040 Wien (AT)
(72) Erfinder: POLEDNA, Stefan, A-3400 Klosterneuburg (AT)
(74) Vertreter: Patentanwaltskanzlei Matschnig & Forsthuber OG
(86) Internationale Anmeldenummer: PCT/AT2013/050083
(87) Internationale Veröffentlichungsnummer: WO 2013/152378

(56) Entgegenhaltungen:
- WO-A1-2004/066530
- US-A1- 2009 225 743
- US-B1- 6 256 507
- US-B1- 6 687 752
- US-B1- 7 800 534
- JON S WARNER ET AL: "GPS Spoofing Countermeasures", INTERNET CITATION, 1. Dezember 2003 (2003-12-01), XP007914429, Gefunden im Internet: URL:http://www.homelandsecurity.org/bullet in/dual%20benefit/warner_gps_spoofing.html [gefunden am 2010-08-13]
- KOPETZ H ET AL: "Integration of Internal and External Clock Synchronization by the Combination of Clock-State and Clock-Rate Correction in Fault-Tolerant Distributed Systems", REAL-TIME SYSTEMS SYMPOSIUM, 2004. PROCEEDINGS. 25TH IEEE INTERNATIONA L LISBON, PORTUGAL 05-08 DEC. 2004, PISCATAWAY, NJ, USA,IEEE, 5 December 2004 (2004-12-05), pages 415-425, XP010759558, DOI: 10.1109/REAL.2004.27 ISBN: 978-0-7695-2247-0

## Beschreibung

Die Erfindung betrifft ein Verfahren zur Erstellung von fail-silent Synchronisationsnachrichten in einem verteilten Echtzeitsystem.

Solche Verfahren sind aus den folgenden Dokumenten bekannt:
WO 2004/066530 A1, US 2009/225743 A1, sowie aus der Druckschrift von Kopetz et al.: "Integration of Internal and External Clock Synchronization by the Combination of Clock-State and Clock-Rate Correction in Fault-Tolerant Distributed Systems", veröffentlicht in Real-Time Systems Symposium, 2004. Proceedings. 25th IEEE International Lissabon, Portugal 05-08 Dez. 2004.

Die vorliegende Erfindung liegt im Bereich der Computertechnik. Sie beschreibt ein innovatives Verfahren, wie zuverlässige Synchronisationsnachrichten, die dem SAE Standard AS6802 von TT Ethernet und dem IEEE Standard 1588 entsprechen, aus Satellitensignalen mittels einer Masterclock generiert werden können.

In einem verteilten fehlertoleranten Echtzeitsystem, indem eine Anzahl von Rechnern einen physikalischen Prozess steuert, ist es vorteilhaft, wenn alle Rechner über eine fehlertolerante physikalische Zeitbasis entsprechend dem TAI Standard verfügen [7]. Der Aufbau einer solchen Zeitbasis kann durch den Empfang von periodischen Synchronisationsnachrichten erfolgen, die von einer fehlertoleranten Masteruhr gesendet werden. Eine Synchronisationsnachricht beinhaltet in ihrem Datenfeld den Zeitpunkt des Sendens durch die Masteruhr.

Im Folgenden wird ein Verfahren beschrieben, wie eine solche fehlertolerante Masteruhr, die zuverlässige Synchronisationsnachrichten entsprechend dem SAE Standard AS6802 von TT Ethernet [8] und dem IEEE Standard 1588 [9] generiert, aufgebaut werden kann.

Nachstehend werden die in dem vorliegenden Dokument verwendeten Begriffe erklärt: Eine Ethernet Nachricht beinhalten einen *Header,* ein *Datenfeld* und ein redundantes *CRC Feld.* In einer richtigen *geschlossenen* Nachricht ist das CRC Feld mit dem Inhalt der Nachricht *konsistent.* Eine Nachricht ist *offen,* wenn kein *konsistentes CRC Feld* existiert. Wenn im Datenfeld einer Nachricht eine Modifikation vorgenommen werden soll, so muss die Nachricht zuerst geöffnet werden. Im Rahmen der Öffnung einer Nachricht wird überprüft, ob der Inhalt der geschlossenen Nachricht mit dem CRC Feld konsistent ist. Wenn dies nicht der Fall ist, wird die Nachricht verworfen. Nach Durchführung der Modifikation im Datenfeld der *offenen* Nachricht muss die Nachricht wieder *geschlossen* werden, d.h. es muss ein neues konsistentes CRC-Feld errechnet werden, ehe die Nachricht weiter gesendet werden darf. Wenn in einer offenen Nachricht eine Modifikation vorgenommen wird, so kann ein während der Modifikation auftretender transienter Fehler (z.B., ein SEU (*single event upset*) durch die natürliche kosmische Strahlung) einen Fehler in der Nachricht herbeiführen, der auch nach Schließung der Nachricht vorhanden bleibt.

Im Bereich der Computerzuverlässigkeit hat der Begriff einer *Fault-Containment Unit* (FCU) eine zentrale Bedeutung [7, S. 136]. Unter einer *FCU* wird ein abgekapseltes Subsystem verstanden, wobei die unmittelbaren Auswirkungen einer Fehlerursache auf dieses Subsystem eingegrenzt sind.

Die Qualität einer Echtzeituhr wird durch die Ganggenauigkeit [7] charakterisiert. Wenn zwei Echtzeituhren verglichen werden, so unterscheidet man zwischen dem Standunterschied und dem Gangunterschied. Wenn der Stand einer Echtzeituhr regelmäßig von einer Referenzuhr abweicht, so deutet dies auf einen Gangunterschied hin, der mittels einer digitalen Mikro/Makro Tick Transformationslogik korrigiert werden kann.

Es ist eine Aufgabe der Erfindung, eine Lösung dafür anzugeben, wie zuverlässige Synchronisationsnachrichten, insbesondere entsprechend dem SAE Standard AS6802 von TT Ethernet [8] und dem IEEE Standard 1588 [9] generiert, werden können.

Diese Aufgabe wird mit einem erfindungsgemäßen Verfahren dadurch gelöst, dass das Verfahren folgenden Funktionseinheiten verwendet: einen Satellitenempfänger zum Empfang eines Zeitsignals (S-Signal) von einem Navigationssatellitensystem, eine präzise Referenzuhr, die ein tatsächliches Zeitsignal (R-Signal) generiert, einen zentralen Rechner, einen Monitor, und einen Datenblock zur Speicherung von Konfigurationsparametern, wobei der Satellitenempfänger periodisch ein S-Signal generiert und wobei die Referenzuhr periodisch ein R-Signal produziert, wobei die nominale Frequenz und Phase des R-Signals identisch ist mit der Frequenz und Phase des S-Signals, und wobei die Differenz zwischen dem nominalen und tatsächlichen R-Signal verwendet wird, um diese Differenz in Zukunft zu minimieren, und wobei im Normalfall des Satellitenempfängers die periodische Synchronisationsnachricht, die entsprechend den Konfigurationsparametern von dem zentralen Rechner zu generieren ist, auf der Grundlage des S-Signals generiert wird und die Differenz zwischen dem nominalen und tatsächlichen R-Signal verwendet wird, um - vorzugsweise kurzfristig - den Stand und - vorzugsweise langfristig - den Gang der Referenzuhr an das S-Signal anzupassen, und wobei im Anomaliefall des Satellitenempfängers die Ganganpassung der Referenzuhr ausgesetzt wird, und wobei im Fehlerfall des Satellitenempfängers die periodische Synchronisationsnachricht, welche entsprechend den Konfigurationsparametern vom zentralen Rechner zu generieren ist, auf der Grundlage des R-Signals generiert wird, und wobei der Monitor überprüft, ob der in der Synchronisationsnachricht enthaltene Sendezeitpunkt mit dem tatsächlichen Sendezeitpunkt übereinstimmt und der Abstand zwischen zwei aufeinanderfolgenden Synchronisationsnachrichten innerhalb eines a priori festgelegten Toleranzintervalls liegt, und, falls dies nicht der Fall ist, die Synchronisationsnachricht derart modifiziert, dass jeder Empfänger die Synchronisationsnachricht als fehlerhaft erkennt.

Der Kern der vorliegenden Erfindung besteht darin, dass eine Masteruhr über drei unabhängige Zeitquellen verfügt, die sich wechselseitig überprüfen und ergänzen: (1) ein periodisches Zeitsignal von einem Satellitenempfänger, (2) ein periodisches Zeitsignal einer lokalen Referenzuhr und (3) eine periodische Zeitquelle eines unabhängigen Monitors. Im Normalfall wird von einem zentralen Rechner der Masteruhr das Zeitsignal des Satellitenempfängers als Grundlage für die Generierung der periodische Synchronisationsnachricht verwendet und der Gang der lokalen Referenzuhr an den Gang des Satellitenempfängers angepasst. Wenn eine Anomalie auftritt, z.B. ändert sich die Feldstärke der Satellitensignale außerhalb des normalen Intervalls, dann wird keine Gangkorrektur der Referenzuhr vorgenommen. Wenn vom zentralen Rechner ein Fehler oder Ausfall des Satellitensignals festgestellt wird, so bildet die Referenzuhr die Grundlage für die Generierung der periodischen Synchronisationsnachricht. Parallel zum Zentralrechner überprüft ein unabhängiger Monitor den Inhalt jeder Synchronisationsnachricht und den zeitlichen Abstand zwischen aufeinanderfolgenden Synchronisationsnachrichten, ohne die Synchronisationsnachricht zu öffnen, um Fehler, die vor dem Schließen der Synchronisationsnachricht aufgetreten sind, zu erkennen. Wenn vom Monitor ein Fehler erkannt wird, so wird die auslaufende Synchronisationsnachricht abgebrochen oder derart verändert, dass jeder Empfänger die modifizierte Synchronisationsnachricht als fehlerhaft erkennen kann. Somit ist mit hoher Wahrscheinlichkeit gewährleistet, dass eine syntaktisch richtige Synchronisationsnachricht auch inhaltlich richtig ist. Wenn in einem System zwei unabhängige Masteruhren eingesetzt, werden, so wird im System der Ausfall einer Masteruhr toleriert.

Die wesentliche Innovation des vorliegenden Verfahrens betrifft den Aufbau einer Masteruhr zur Generierung von periodisch *fail-silent* Ethernet kompatiblen Synchronisationsnachrichten, die die physikalischen Zeit, wie sie durch das GPS System definiert ist, in einem verteilten Echtzeitsystem zur Verfügung stellt und die Fehler, die durch den Ausfall der Hardware oder Security Attacken verursacht werden, erkennt und teilweise toleriert. Bei Einsatz von zwei oder mehr solchen unabhängigen Masteruhren kann ein fehlertolerantes Synchronisationssystem aufgebaut werden.

Die im Stand der Technik beschriebenen Verfahren zur Erstellung von Synchronisationsnachrichten [3,4] auf der Basis von Satellitensignalen gehen auf Probleme der Security und Fehlertoleranz einer Masteruhr nicht ein.

Die vorliegende Erfindung legt ein innovatives Verfahren und einen Apparat zur zuverlässigen Generierung von Synchronisationsnachrichten entsprechend dem SAE Standard AS6802 von TT Ethernet und dem IEEE Standard 1588 zum Aufbau einer zuverlässigen physikalischen Zeitbasis in einem verteilten Echtzeitsystem offen. Erfindungsgemäß wird eine fail-silent Masteruhr aus drei Fault-Containment Units aufgebaut, einem Satellitenempfänger, einem zentralen Rechner mit einer Referenzuhr und einem unabhängigen Monitor mit einem eigenen Taktgeber. Im Normalfall wird die Synchronisationsnachricht auf der Grundlage des Zeitsignals des Satellitenempfängers generiert und der Gang der Referenzuhr an den Gang des Satellitensignals angepasst. Zusätzliche wird der genaue zeitliche Abstand zwischen den periodischen Synchronisationsnachrichten von einem unabhängigen Monitor überwacht. Wenn der Monitor einen Fehler erkennt, wird die auslaufende Synchronisationsnachricht derart modifiziert, dass jeder Empfänger die modifizierte Synchronisationsnachricht als fehlerhaft erkennen kann. Bei Ausfall des vom Satellitenempfängers generierten Zeitsignals wird das Zeitsignal der Referenzuhr als Grundlage für die Generierung Synchronisationsnachricht verwendet. Wenn in einem verteilten Echtzeitsystem eine zweite *fail-silent* Masteruhr eingesetzt wird, so kann der Totalausfall einer der beiden Masteruhren toleriert werden.

Weiters vorteilhafte Ausgestaltungen des erfindungsgemäßen Verfahrens sind wie folgt beschrieben, die zusätzlich, alternativ oder in beliebiger Kombination miteinander realisiert sein können. Dabei kann vorgesehen sein, dass
-) der Monitor nach Start-up in eine Initialphase eintritt, während welcher der Abstand zwischen aufeinanderfolgenden Synchronisationsnachrichten vermessen wird und in der folgenden Betriebsphase den gemessen Abstand verwendet, um einen fehlerhaften Abstand von zwei aufeinanderfolgenden Synchronisationsnachrichten zu erkennen;
-) der zentralen Rechner periodisch eine Diagnosenachricht generiert, in welcher der Betriebszustand und eventuelle Anomalien oder Fehler des Gesamtsystems während der vorangegangen Periode enthalten sind;
-) die in dem Konfigurationsdatenblock gespeicherten Daten mit fehlererkennenden Codes gesichert sind;
-) die im Konfigurationsdatenblock gespeicherten Daten mit fehlerkorrigierenden Codes gesichert sind;
-) die im Konfigurationsdatenblock gespeicherten Parameter nur geändert werden können, wenn eine physikalische Verbindung zwischen einem externen Eingabegerät und dem zentralen Rechner existiert;
-) die im Konfigurationsdatenblock gespeicherten Parameter über das Internet mit einem kryptographisch gesicherten Protokoll änderbar sind;
-) der Satellitenempfänger die Feldstärke der Satellitensignale misst und dem zentralen Rechner mitteilt, um Anomalien in den Satellitensignalen erkennen zu können;
-) die Synchronisationsnachricht durch eine elektronische Unterschrift gesichert ist;
-) der syntaktische Aufbau der Synchronisationsnachricht dem SAE Standard AS6802 entspricht;
-) der syntaktische Aufbau der Synchronisationsnachricht dem IEEE Standard 1588 entspricht;
-) die S-Signale auf der Basis der Satellitensignale vom GPS System generiert werden, und/oder die S-Signale auf der Basis der Satellitensignale vom Galileo System generiert werden, und/oder die S-Signale auf der Basis der Satellitensignale vom GLANOSS System generiert werden;
-) nach dem Ende des Ausfalls des Satellitenempfängers das von der Referenzuhr generierte R-Signal mit einer maximalen vordefinierten Gangdifferenz an das wieder vorhandene S-Signal geführt wird, um die während des Ausfalls akkumulierte Uhrenstanddifferenz zwischen dem R-Signal und dem S-Signal abzubauen.

Weiters wird die Erfindung mit einem eingangs erwähnten Apparat, insbesondere einer Masteruhr, zur Durchführung des erfindungsgemäßen Verfahrens gelöst.

Vorzugsweise leitet der Apparat das R-Signal der Referenzuhr von einem temperaturkompensierten Quarz abgeleitet, oder das R-Signal der Referenzuhr wird von einer Atomuhr abgeleitet.

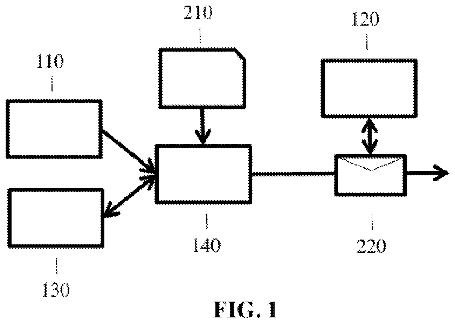

Die vorliegende Erfindung wird an Hand der folgenden Zeichnung beispielhaft erklärt. Es zeigt die einzige Figur 1 den inneren Aufbau einer fail-silent Master Uhr.

Fig. 1 zeigt ein Strukturdiagramm der *fail-silent* Masteruhr. Die Masteruhr besteht aus drei Fault-Containment Units (FCUs), (1) dem Satellitenempfänger **110,** (2) dem Zentralrechner **140** mit der Referenzuhr **130,** und (3) dem Monitor **120.** Die Parameter, die die genaue Funktion der Masteruhr festlegen, sind in dem Konfigurationsdatenblock **210** gespeichert. Die im Konfigurationsdatenblock **210** gespeicherten Daten können mit fehlererkennenden oder fehlerkorrigierenden Codes gesichert werden. Das Laden der Parameter in den Konfigurationsdatenblock **210** erfolgt über eine physikalische Verbindung von einem Eingabegerät mit der Masteruhr, um einen Security Angriff über das Internet zu verhindern. Alternativ kann der Konfigurationsdatenblock unter Verwendung eines kryptographisch gesicherten Protokolls über das Internet geladen werden.

Der Satellitenempfänger **110** sendet periodische Zeitsignale, die *S-Signale,* an den zentralen Rechner **140.** Parallel dazu sendet die unabhängige Referenzuhr **130** periodische Zeitsignale, *die R-Signale,* an den zentralen Rechner **140.** Im fehlerfreien Zustand sollen die S-Signale und die nominalen R-Signale in Gang und Phase identisch sein.

In der Referenzuhr befindet sich ein genauer Taktgeber, z.B. ein temperaturkompensierter Oszillator oder eine Atomuhr. Das von diesem genauen Taktgeber generierte Primärsignal wird durch eine digitale *Micro*/*Macro-tick Transformationseinheit* in der Referenzuhr **130** in das R-Signal transformiert, das an der Schnittstelle zum zentralen Rechner **140** erwartet wird. Diese digitale *Micro*/*Macro-tick Transformationseinheit* kann vom Zentralrechner parametrisiert werden, so dass der Stand und der Gang des von der Referenzuhr **130** ausgegebenen R-Signals digital modifiziert werden kann. Im Normalfall wird von dem zentralen Rechner **140** der Unterschied zwischen dem Zeitsignal von dem Satellitenempfänger **110,** dem *S-Signal,* und dem tatsächlichen Zeitsignal von der Referenzuhr **130,** dem *R-Signal,* gemessen und die *Micro*/*Macro-tick Transformationseinheit* derart parametrisiert, dass das tatsächliche R-Signal von der Referenzuhr **130** dem nominalen R-Signal (vorgegebenen durch das S-Signal des Satellitenempfängers) angepasst wird. Diese Anpassung erfolgt auf zwei Arten. Kurzfristig wird der Stand des R-Signals an den Stand des S-Signals angepasst. Langfristig wird der Gang des R-Signals an den Gang des S-Signals angepasst. Durch diese Anpassung des Gangs der Referenzuhr **130** an das vom Satellitensystem vorgegebenen S-Signal kann die Genauigkeit der Drift des R-Signals um bis zu zwei Größenordnungen verbessert werden [7, p. 72].

Der Satellitenempfänger **130** empfängt die Navigationssignale von einem Navigationssatellitensystem [6], z.B. vom GPS System, dem GLANOSS System oder dem zukünftigen Galileo System und überwacht die Feldstärke dieser Signale. Diese Überwachung der Feldstärke wird durchgeführt, um eventuelle Security Attacken auf das Satellitensignals, z.B. das GPS Signal, zu entdecken. Im fehlerfreien Zustand liegen die Feldstärken des GPS Signals in einem *gängigen Intervall,* das durch die Messung der auftretenden Feldstärken über einen langen Zeitraum bestimmt wird. Wenn sich diese Feldstärken spontan drastisch ändern und außerhalb des gängigen Intervalls liegen, so deutet dies auf einen Security Angriff hin. Grundsätzlich kann zwischen zwei Arten von Security Angriffen auf ein Satellitensignal unterschieden werden: *Blocking* oder *Spoofing* [5]. Beim *Blocking* wird das GPS Signal gestört, so dass der Satellitenempfänger keine syntaktisch korrekten Nachrichten empfangen kann. *Blocking* Attacken sind vom Satellitenempfänger leicht zu erkennen, da das Signal quasi ausfällt. Beim *Spoofing* wird ein gefälschtes syntaktisch korrektes Signal generiert, um den Empfänger in die Irre zu führen. Da das gefälschte Spoofing Signal das authentische GPS Signal überdecken soll, muss die Feldstärke des Spoofing Signal außerhalb des gängigen Bereichs liegen. Zwischen der gängigen Feldstärke und einem eindeutig erkannten Fehlzustand durch Spoofing liegt ein Zwischenbereich, der als Anomalie bezeichnet wird. Sobald eine Anomalie erkannt wird, wird die Gangkorrektur der Referenzuhr ausgesetzt, um eine möglicherweise falsche Anpassung des Uhrengangs der Referenzuhr an ein nicht authentisches Sattelitensignal zu verhindern.

Im fehlerfreien Fall generiert der Zentralrechner **140** auf der Grundlage des S-Signals vom Satellitenempfänger **110** periodisch eine Ethernet kompatible Synchronisationsnachricht **220,** die dem SAE Standard AS6802 von TT Ethernet bzw. dem IEEE Standard 1588 entspricht. Die Parameter dieser Nachricht-Frequenz und Phase-werden dem Konfigurationsdatenblock **210** entnommen. Falls gefordert, kann die Synchronisationsnachricht durch eine elektronische Unterschrift [7] geschützt werden, um die Authentizität der Nachricht sicherzustellen. Der Zentralrechner **140** schließt die geschlossene Synchronisationsnachricht **220** durch die Berechnung und Anfügung des CRC Polynoms und sendet die Nachricht exakt zu dem in der Nachricht enthaltenen Sendezeitpunkt an die designierten Empfänger.

Wenn das S-Signal an der Schnittstelle zwischen dem Satellitenempfänger **110** und dem Zentralrechner **120** ausfällt oder wenn vom Zentralrechner eine Spoofing Attacke auf das Satellitensignal festgestellt wurde, so generiert der Zentralrechner **140** die Synchronisationsnachricht **220** auf der Grundlage des R-Signals von der Referenzuhr **130.** Sobald ein korrektes S-Signal wieder verfügbar ist, stellt der Zentralrechner die Standdifferenz zwischen dem R-Signal und dem S-Signal fest und ändert über die Parameter der *Micro*/*Macro-tick Transformationseinheit* den Gang der Referenzuhr **130** so lange, bis das R-Signal wieder mit dem S-Signal übereinstimmt. Dabei wird eine maximale *a priori* festgelegte, im Konfigurationsdatenblock **210** enthaltene Abweichung des Gangs der Referenzuhr vom Gang des Satellitensignals nicht überschritten. Sobald der Stand vom R-Signal dem Stand vom S-Signal erreicht hat, bildet der Zentralrechner **140** die Synchronisationsnachricht wieder auf der Basis des S-Signals.

Im Normalbetrieb wird die auslaufende geschlossene Synchronisationsnachricht **220** vom Monitor **120** im *cut through* Verfahren überprüft. Dabei wird der zeitliche Abstand zweier aufeinanderfolgender Synchronisationsnachrichten **220** mit der Uhr des Monitors **120** gemessen und der Inhalt der Synchronisationsnachricht überprüft. Wenn der zeitliche Abstand zweier aufeinanderfolgender Synchronisationsnachrichten **220** außerhalb eines vorab bestimmten Toleranzintervalls liegt oder wenn ein inhaltlicher Fehler erkannt wird, wird die auslaufende geschlossene Synchronisationsnachricht **220** derart verändert, z.B. durch vorzeitigen Abbruch des Sendevorgangs, dass jeder Empfänger der Synchronisationsnachricht **220** die Synchronisationsnachricht als fehlerhaft erkennen kann. Zusätzlich sendet der Monitor eine Fehlernachricht mit dem Fehlergrund an den Zentralrechner **140.**

Das Toleranzintervall, um das der Abstand zweier aufeinanderfolgender Synchronisationsnachrichten **220** liegen darf, wird in der Initialisierungsphase der Masteruhr durch Messung des Nachrichtenabstands einer Menge von Synchronisationsnachrichten durch den Monitor **120** bestimmt. Alternativ kann die Länge dieses Toleranzintervall im Konfigurationsdatenblock **210** angegeben werden.

Der Zentralrechner **140** sendet periodisch (die Periode ist im Konfigurationsdatenblock **210** festgelegt) eine Diagnosenachricht an einen designierten Diagnoserechner. In dieser Diagnosenachricht werden alle wesentlichen Parameter, wie gemessene Feldstärke des Satellitensignals, Gang und Standdifferenz des tatsächlichen R Signals und eventuell aufgetretene Fehlermeldungen während der letzten Periode, dem Diagnoserechner mitgeteilt.

### Zitierte Literatur:

[1] US 5,694,542 Kopetz, H. *Time-triggered communication control unit and communication method.* Granted December 2,1997.
[2] US 7,839,868. Kopetz, H. *Communication method and system for the transmission of time-driven and event-driven Ethernet messages.* Granted November 23, 2010.
[3] US 8,089,991 Ungermann. *Network and method for clock synchronization of clusters in a time triggered network.* Granted January 3, 2012.
[4] US 8,018,950 Wu, et al. *Systems and methods for distributing GPS clock to communications devices.* Granted September 13, 2011
[5] Warner, J. et. al. GPS Spoofing Countermeasures, Los Alamos National Laboratory. URL: http://lewisperdue.com/DieByWire/GPS-Vulnerability-LosAlamos.pdf
[6] Hofmann-Wellenhof, B. et al. GNSS - Global Navigation Satellite Systems: GPS, GLONASS, Galileo, and more. Springer Verlag, 2007
[7] Kopetz, H. Real-Time Systems, Design Principles for Distributed Embedded Applications. Springer Verlag. 2011.
[8] SAE Standard AS6802 von TT Ethernet. URL: http://standards.sae.org/as6802
[9] IEEE 1588 Standard for a Precision Clock Synchronization Protocol for Network Measurement and Control Systems. URL: http://www.ieee1588.com/

## Patentansprüche

1. Verfahren zur Erstellung von fail-silent Synchronisationsnachrichten in einem verteilten Echtzeitsystem,
wobei
das Verfahren folgenden Funktionseinheiten verwendet: einen Satellitenempfänger (**1**10) zum Empfang eines Zeitsignals von einem Navigationssatellitensystem, eine präzise Referenzuhr **(130),** die ein im Folgenden als R-Signal bezeichnetes periodisches Zeitsignal generiert, einen zentralen Rechner **(140),** einen Monitor **(120)** mit einer periodischen Zeitquelle, und einen Datenblock **(210)** zur Speicherung von Konfigurationsparametern, wobei der Satellitenempfänger **(110)** periodisch ein S-Signal generiert,
wobei die Frequenz und Phase des nominalen R-Signals identisch ist mit der Frequenz und Phase des S-Signals, und wobei die Differenz zwischen dem nominalen und tatsächlichen R-Signal verwendet wird, um diese Differenz in Zukunft zu minimieren, und wobei
• im Normalfall des Satellitenempfängers **(110)** eine periodische Synchronisationsnachricht **(220),** die entsprechend den Konfigurationsparametern **(210)** von dem zentralen Rechner **(140)** zu generieren ist, auf der Grundlage des S-Signals generiert wird und die Differenz zwischen dem nominalen und tatsächlichen R-Signal verwendet wird, um den Stand und den Gang der Referenzuhr **(130)** an das S-Signal anzupassen, und wobei
• im Anomaliefall des Satellitenempfängers **(110)** die Ganganpassung der Referenzuhr **(120)** ausgesetzt wird, und wobei
• im Fehlerfall des Satellitenempfängers **(110)** die periodische Synchronisationsnachricht **(220),** welche entsprechend den Konfigurationsparametern **(210)** vom zentralen Rechner **(140)** zu generieren ist, auf der Grundlage des tatsächlichen R-Signals generiert wird;
und wobei mit der periodischen Zeitquelle des Monitors **(120)** der zeitliche Abstand zweier aufeinander folgender Synchronisationsnachrichten **(220)** gemessen wird und der Monitor **(120)** überprüft, ob der in der Synchronisationsnachricht enthaltene Sendezeitpunkt mit dem tatsächlichen Sendezeitpunkt übereinstimmt und der Abstand zwischen zwei aufeinanderfolgenden Synchronisationsnachrichten **(220)** innerhalb eines a priori festgelegten Toleranzintervalls liegt, und, falls dies nicht der Fall ist, die Synchronisationsnachricht **(220)** derart modifiziert, dass jeder Empfänger die Synchronisationsnachricht **(220)** als fehlerhaft erkennt.

2. Verfahren nach Anspruch 1, **dadurch gekennzeichnet, dass** der Monitor **(120)** nach Start-up in eine Initialphase eintritt, während welcher der Abstand zwischen aufeinanderfolgenden Synchronisationsnachrichten **(220)** vermessen wird und in der folgenden Betriebsphase den gemessen Abstand verwendet, um einen fehlerhaften Abstand von zwei aufeinanderfolgenden Synchronisationsnachrichten **(220)** zu erkennen.

3. Verfahren nach Anspruch 1, **dadurch gekennzeichnet, dass** der zentralen Rechner **(140)** periodisch eine Diagnosenachricht generiert, in welcher der Betriebszustand und eventuelle Anomalien oder Fehler des Gesamtsystems während der vorangegangen Periode enthalten sind.

4. Verfahren nach einem der Ansprüche 1 bis 3, **dadurch gekennzeichnet, dass** die in Konfigurationsdatenblock **(210)** gespeicherten Daten mit fehlererkennenden Codes gesichert sind.

5. Verfahren nach einem der Ansprüche 1 bis 4, **dadurch gekennzeichnet, dass** die im Konfigurationsdatenblock **(210)** gespeicherten Daten mit fehlerkorrigierenden Codes gesichert sind.

6. Verfahren nach einem der Ansprüche 1 bis 5, **dadurch gekennzeichnet, dass** die im Konfigurationsdatenblock **(210)** gespeicherten Parameter nur geändert werden können, wenn eine physikalische Verbindung zwischen einem externen Eingabegerät und dem zentralen Rechner **(140)** existiert.

7. Verfahren nach einem der Ansprüche 1 bis 6, **dadurch gekennzeichnet, dass** die im Konfigurationsdatenblock **(210)** gespeicherten Parameter über das Internet mit einem kryptographisch gesicherten Protokoll änderbar sind.

8. Verfahren nach einem der Ansprüche 1 bis 7, **dadurch gekennzeichnet, dass** der Satellitenempfänger **(110)** die Feldstärke der Satellitensignale misst und dem zentralen Rechner **(140)** mitteilt, um Anomalien in den Satellitensignalen erkennen zu können.

9. Verfahren nach einem der Ansprüche 1 bis 8, **dadurch gekennzeichnet, dass** die Synchronisationsnachricht **(220)** durch eine elektronische Unterschrift gesichert ist.

10. Verfahren nach einem der Ansprüche 1 bis 9, **dadurch gekennzeichnet, dass** der syntaktische Aufbau der Synchronisationsnachricht **(220)** dem SAE Standard AS6802 entspricht und/oder
der syntaktische Aufbau der Synchronisationsnachricht **(220)** dem IEEE Standard 1588 entspricht.

11. Verfahren nach einem der Ansprüche 1 bis 10, **dadurch gekennzeichnet, dass** die S-Signale auf der Basis der Satellitensignale des GPS Systems und/oder des Galileo Systems und/oder des GLANOSS Systems generiert werden.

12. Verfahren nach einem der Ansprüche 1 bis 11, **dadurch gekennzeichnet, dass** nach dem Ende des Ausfalls des Satellitenempfängers **(110)** das von der Referenzuhr **(130)** generierte R-Signal mit einer maximalen vordefinierten Gangdifferenz an das wieder vorhandene S-Signal geführt wird, um die während des Ausfalls akkumulierte Uhrenstanddifferenz zwischen dem R-Signal und dem S-Signal abzubauen.

## Claims

1. Method for generating fail-silent synchronization messages in a distributed real-time system, wherein the method uses the following functional units: a satellite receiver (110) for receiving a time signal from a navigation satellite system, a precise reference clock (130) which generates a periodic time signal, hereinafter referred to as R-signal, a central computer (140), a monitor (120) with a periodic time source, and a data block (210) for storing configuration parameters, wherein the satellite receiver (110) periodically generates an S-signal, wherein the frequency and phase of the nominal R-signal is identical to the frequency and phase of the S-signal, and wherein the difference between the nominal and actual R-signal is used to minimize this difference in the future, and wherein
- in the normal case of the satellite receiver (110), a periodic synchronization message (220), which is to be generated by the central computer (140) in accordance with the configuration parameters (210), is generated based on the S-signal and the difference between the nominal and actual R-signal is used to adapt the state and rate of the reference clock (130) to the S-signal, and wherein
- in the event of an anomaly of the satellite receiver (110), adapting the rate of the reference clock (120) is suspended, and wherein
- in the event of a fault in the satellite receiver (110), the periodic synchronization message (220), which is to be generated by the central computer (140) in accordance with the configuration parameters (210), is generated based on the actual R-signal,
and wherein using the periodic time source of the monitor (120) the time interval between two successive synchronization messages (220) is measured and the monitor (120) checks whether the time of transmission contained in the synchronization message corresponds to the actual transmission time and the distance between two successive synchronization messages (220) is within a tolerance interval defined *a priori,* and, if this is not the case, modifies the synchronization message (220) in such a way that each receiver recognizes the synchronization message (220) as faulty.

2. Method according to claim 1, **characterised in that** the monitor (120), after start-up, enters an initial phase, during which the interval between successive synchronization messages (220) is measured, and, in the subsequent operating phase, uses the measured interval to detect an erroneous interval between two successive synchronization messages (220).

3. Method according to claim 1, **characterised in that** the central computer (140) periodically generates a diagnostic message which contains the operating state and possible anomalies or errors of the overall system during the preceding period.

4. Method according to any one of claims 1 to 3, **characterised in that** the data stored in configuration data block (210) is secured with error-detecting codes.

5. Method according to any one of claims 1 to 4, **characterised in that** the data stored in the configuration data block (210) is secured with error correcting codes.

6. Method according to any one of claims 1 to 5, **characterised in that** the parameters stored in the configuration data block (210) can be changed only if a physical connection exists between an external input device and the central computer (140).

7. Method according to any one of claims 1 to 6, **characterised in that** the parameters stored in the configuration data block (210) can be changed via the Internet using a cryptographically secured protocol.

8. Method according to any one of claims 1 to 7, **characterised in that** the satellite receiver (110) measures the field strength of the satellite signals and communicates this to the central computer (140) in order to allow detecting anomalies in the satellite signals.

9. Method according to any one of claims 1 to 8, **characterised in that** the synchronization message (220) is secured by an electronic signature.

10. Method according to any one of the claims 1 to 9, **characterised in that** the syntactic structure of the synchronization message (220) corresponds to the SAE standard AS6802 and/or the syntactic structure of the synchronization message (220) corresponds to the IEEE standard 1588.

11. Method according to any one of claims 1 to 10, **characterised in that** the S-signals are generated based on the satellite signals of the GPS system and/or the Galileo system and/or the GLANOSS system.

12. Method according to any one of claims 1 to 11, **characterised in that** after the end of the failure of the satellite receiver (110), the R-signal generated by the reference clock (130) is taken to the again-present S-signal with a predefined maximum rate difference in order to reduce the clock difference between the R-signal and the S-signal accumulated during the failure.

## Revendications

1. Procédé de génération de messages de synchronisation silencieux de défaillance dans un système distribué en temps réel, le procédé utilisant les unités fonctionnelles suivantes :
un récepteur satellite (110) pour recevoir un signal de temps d'un système de navigation par satellite, une horloge de référence précise (130) qui génère un signal de temps périodique, ci-après appelé signal R, un ordinateur central (140), un moniteur (120) avec une source de temps périodique, et un bloc de données (210) pour stocker des paramètres de configuration, le récepteur satellite (110) générant périodiquement un signal S,
dans lequel la fréquence et la phase du signal R nominal sont identiques à la fréquence et à la phase du signal S, et dans lequel la différence entre le signal R nominal et le signal R réel est utilisée pour minimiser cette différence à l'avenir, et dans lequel
- dans le cas normal du récepteur satellite (110), un message de synchronisation périodique (220) devant être généré par l'ordinateur central (140) conformément aux paramètres de configuration (210) est généré sur la base du signal S, et la différence entre le signal R nominal et le signal R réel est utilisée pour ajuster l'état et la marche de l'horloge de référence (130) au signal S, et dans lequel
- en cas d'anomalie du récepteur satellite (110), l'ajustage de la marche de l'horloge de référence (120) est suspendu, et dans lequel
- en cas de défaillance du récepteur satellite (110), le message de synchronisation périodique (220), qui doit être généré par l'ordinateur central (140) conformément aux paramètres de configuration (210), est généré sur la base du signal R réel,
et dans lequel l'intervalle de temps entre deux messages de synchronisation successifs (220) est mesuré avec la source de temps périodique du moniteur (120), et le moniteur (120) vérifie si le temps de transmission contenu dans le message de synchronisation correspond au temps de transmission réel et si la distance entre deux messages de synchronisation successifs (220) se situe dans un intervalle de tolérance défini a priori, et, si ce n'est pas le cas, modifie le message de synchronisation (220) de telle sorte que chaque récepteur reconnaisse le message de synchronisation (220) comme étant défectueux.

2. Procédé selon la revendication 1, **caractérisé en ce que** après le démarrage, le moniteur (120) entre dans une phase initiale, pendant laquelle la distance entre des messages de synchronisation successifs (220) est mesurée, et, dans la phase de fonctionnement suivante, utilise la distance mesurée pour détecter une distance erronée de deux messages de synchronisation successifs (220).

3. Procédé selon la revendication 1, **caractérisée en ce que** l'ordinateur central (140) génère périodiquement un message de diagnostic dans lequel sont inclus l'état de fonctionnement et des éventuelles anomalies ou erreurs de l'ensemble du système au cours de la période précédente.

4. Procédé selon l'une quelconque des revendications 1 à 3, **caractérisée en ce que** les données stockées dans le bloc de données de configuration (210) sont sécurisées par des codes de détection d'erreurs.

5. Procédé selon l'une quelconque des revendications 1 à 4, **caractérisé en ce que** les données stockées dans le bloc de données de configuration (210) sont sécurisées par des codes de correction d'erreurs.

6. Procédé selon l'une quelconque des revendications 1 à 5, **caractérisée en ce que** les paramètres enregistrés dans le bloc de données de configuration (210) ne peuvent être modifiés que si une connexion physique existe entre un dispositif d'entrée externe et l'ordinateur central (140).

7. Procédé selon l'une quelconque des revendications 1 à 6, **caractérisée en ce que** les paramètres stockés dans le bloc de données de configuration (210) peuvent être modifiés via Internet à l'aide d'un protocole sécurisé cryptographiquement.

8. Procédé selon l'une quelconque des revendications 1 à 7, **caractérisée en ce que** le récepteur satellite (110) mesure l'intensité du champ des signaux satellites et la communique à l'ordinateur central (140) afin de pouvoir détecter des anomalies dans les signaux satellites.

9. Procédé selon l'une quelconque des revendications 1 à 8, **caractérisée en ce que** le message de synchronisation (220) est sécurisé par une signature électronique.

10. Procédé selon l'une quelconque des revendications 1 à 9, **caractérisé en ce que** la structure syntaxique du message de synchronisation (220) correspond à la norme SAE AS6802 et/ou la structure syntaxique du message de synchronisation (220) correspond à la norme IEEE 1588.

11. Procédé selon l'une quelconque des revendications 1 à 10, **caractérisé en ce que** les signaux S sont générés sur la base des signaux de satellite du système GPS et/ou du système Galileo et/ou du système GLANOSS.

12. Procédé selon l'une quelconque des revendications 1 à 11, **caractérisé en ce que**, après la fin de la panne du récepteur satellite (110), le signal R généré par l'horloge de référence (130) est envoyé au signal S ré-existant avec une différence de taux maximum prédéfinie afin de réduire la différence de position d'horloge entre le signal R et le signal S accumulé pendant la panne.
